# EUROPEAN PATENT APPLICATION

(11) **EP 0 526 825 A1**
(43) Date of publication of application: **10.02.1993**
(21) Application number: 92112880.7
(22) Date of filing: 29.07.1992
(51) Int. Cl.: B60K 17/16, F16B 35/06

(54) **Differential bearing cap fastener**

(30) Priority: 07.08.1991 US 741362
(71) Applicant: EATON CORPORATION, Cleveland, Ohio 44114 (US)
(72) Inventor: Kreinbring, Donald Edward, Kalamazoo, Michigan 49002 (US)
(74) Representative: Rüger, Rudolf, Dr.-Ing.

(57) **Abstract**

An improved fastener (100) is provided for securing inboard axle shaft bearings (32) to pedestals (14, 14') of a differential carrier (8) on opposite sides of differential gearing (16) of a motor vehicle. Fastener (100) includes a threaded section (22) at one end and an enlarged head section (H) at an opposite end that has been adapted such as by including a flange (24) operative to engage a surface of a surrounding axle housing (4) while securing bearing caps (15, 15') respectively to pedestals (14, 14') so as to inhibit deflection of the pedestals and bearing caps during operation of the differential.

## Description

### INTRODUCTION

This invention relates generally to a fastener for securing a bearing cap to a vehicle differential carrier pedestal within an axle housing and more particularly to a fastener that includes an enlarged head section that is adapted to engage the axle housing so as to inhibit deflection of the bearing cap and pedestal during operation of the differential.

### BACKGROUND OF THE INVENTION

Axle shafts extending outwardly from opposite sides of the differential for transferring torque from the main drive shaft to the wheel ends of axle shafts having a differential gearing secured thereto and journaled for rotation at their respective inboard location by bearings located within the axle housing adjacent the differential. The bearings are secured to internal pedestals of the forward housing of the differential called the carrier by means of bearing caps that are secured to the pedestals in a typical pillow-block type arrangement by means of fasteners that heretofor have characteristically been standard cap screws.

A problem has existed however in that forces tend to be created when the differential is operating, particularly under load, that deflect the pedestal and bearing cap in a direction away from the differential along the axle shaft. Such repetitive deflection is apt to lead to reduced bearing life and may event result in shortening the life of the differential gearing assembly itself.

The present invention addresses the deflection problem by providing a fastener having a head section that is adapted to engage the surrounding axle housing when the bearing cap is secured to the pedestal by the fastener in a manner operative to inhibit deflection of the bearing cap and pedestal during operation of the differential.

### SUMMARY OF THE INVENTION

Accordingly, it is an object of this invention to provide an improved fastener for securing a bearing cap to a transmission carrier pedestal that is adapted to inhibit deflection thereof during operation of the differential.

It is another object of this invention to provide an improved fastener for securing a bearing cap to a differential carrier pedestal about an axle shaft differential gearing bearing that is particularly adapted to inhibit deflection of the bearing cap and pedestal in a direction away from the differential along the axle shaft.

It is still another object of this invention to provide an improved vehicle axle assembly in which the differential gearing secured to the axle shafts are journaled for rotation by respective bearings that are secured to the differential carrier housing pedestal within the axle housing by respective bearing caps that are secured to the pedestals by means of fasteners adapted to inhibit deflection of the pedestals and bearing caps during operation of the differential.

### BRIEF DESCRIPTION OF THE DRAWINGS

FIGURE 1 is a perspective view of a vehicle axle assembly 50 including an axle housing 4;
FIGURE 2 is a view of axle assembly 50 of FIGURE 1 taken along view line 2-2 with axle housing 4 removed;
FIGURE 3 is a perspective view of axle housing 4 of FIGURE 1;
FIGURE 4A is a side elevation view of a fastener 100 made in accordance with the invention;
FIGURE 4B is a side elevating view of a separate flange (24) for use with a standard cap screw; and
FIGURE 5 is a side elevation view of the differential assembly of FIGURE 2 taken along view line 5-5.

### DESCRIPTION OF SOME PREFERRED EMBODIMENTS

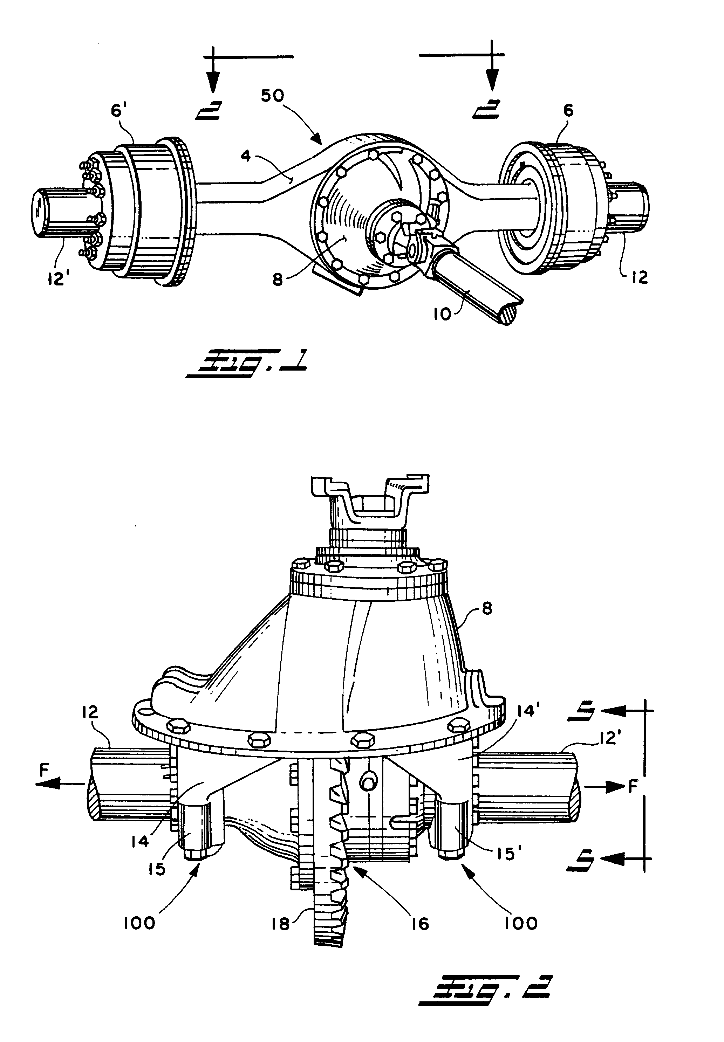

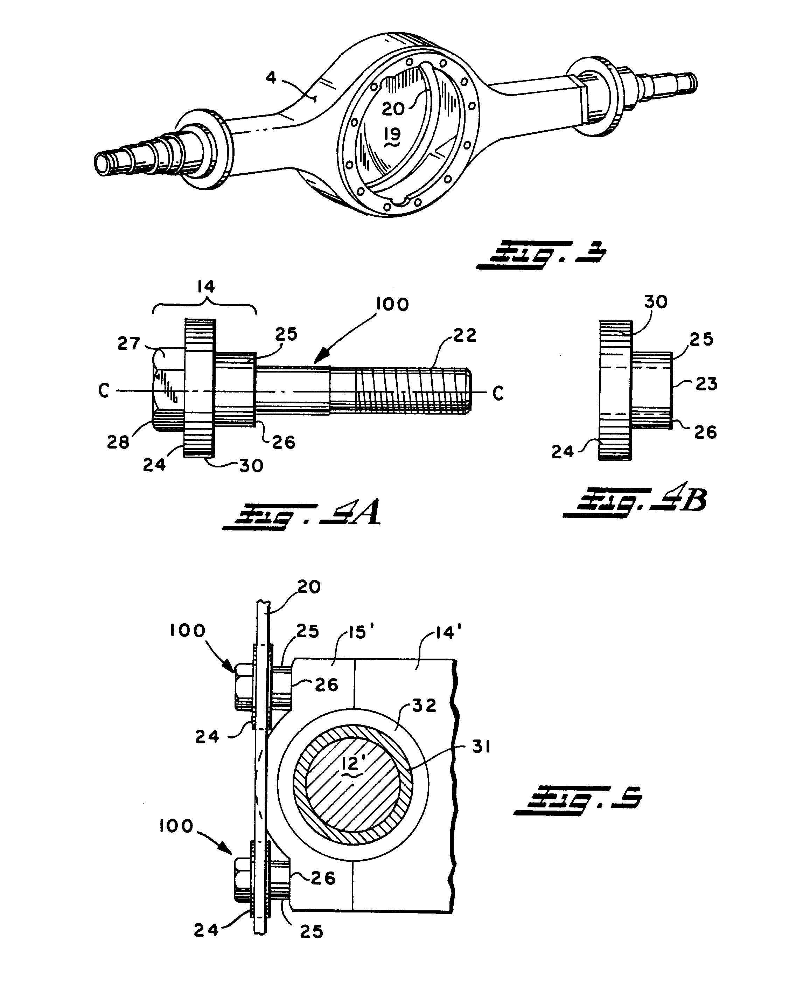

In FIGURE 1, axle assembly 50 is the rear axle of a motor vehicle such as a truck. Assembly 50 includes an axle housing 4 to which is secured a differential carrier 8 that supports the differential gearing to transfer rotary torque from a drive shaft 10 driven by the vehicle engine (not shown) to wheel hubs or ends 6 and 6' secured to rotary axle shafts (not shown). The manner by which the axle shafts are journaled for rotation in connection with the differential is better illustrated in FIGURE 2.

In FIGURE 2, axle housing 4 has been removed from axle assembly 50 of FIGURE 1 to reveal differential gearing 16 including ring gear 18 mounted on carrier 8 well known to those skilled in the art of such differential gearing. Also shown, are pedestal 14 and 14' extending from carrier 8 on opposite sides of gearing 16. Pedestals 14 and 14' respectively provide a cradle base for securing the inboard bearings in which axle shafts 12 and 12' are journaled for rotation in a pillow-block type arrangement better illustrated in FIGURE 5.

The bearings (not shown in FIGURE 2) are respectively secured to pedestals 14 and 14' by means of bearing caps 15 and 15' by fasteners 100 hereinafter described.

One of the problems with the above described assembly arrangement is that the pedestals and bearing caps were heretofore subject to deflection arising from opposed forces created during operation of the differential (particularly while under load), that are directed primarily axially outwardly along axle shafts 12 and 12' as shown in FIGURE 2. The respective deflection of the pedestals and bearing caps in turn permits movement of the axle shafts themselves, particularly in opposite axial directions during operation of the vehicle, which can lead to premature wearing of the bearings and to the differential gearing assembly itself.

As shown in FIGURE 3, axle housing 4 has a cavity 19 in which differential gearing assembly 16 is enclosed when carrier 8 is secured thereto and it also has surfaces such as referenced by numeral 20 that are stationary relative the axle shafts and can therefore be used to inhibit deflection of the pedestals and bearing caps in the manner hereinafter described.

FIGURE 4A shows an embodiment of the fastener of the invention in the form of a fastener 100. Fastener 100 is a screw type fastener having a central rotational axis "C"; a threaded section 22 at one end; and an enlarged head section "H" at an opposite end. Head section "H" includes a radially outwardly extending flange 24 disposed intermediate a hub portion 25 having an annular surface 26 facing towards threaded section 22 and a portion 28 adapted, such as by including a plurality of outwardly facing flats 27, to provide means for enabling one to rotate fastener 100 about its rotary axis "C" by means of a wrench or other suitable tool. Annular surface 26 may be provided by head portion "H" including a hub portion 25 intermediate flange 24 and threaded section 22 having a diameter less than the diameter of flange 24 and larger than the diameter of threaded section 22.

Head section "H" has been adapted to engage a surface of axle housing 4 where the bearing cap is secured to the pedestal such as shown in FIGURE 5 where outer peripheral edge 30 of flange 24 engages the inner surface of rib 20 of axle housing 4 shown in FIGURE 3 that faces in a direction substantially transverse to rotational axis "C". As such, the the engagement of a portion of head section "H", such as peripheral edge 30 of flange 24 upon a surface such as surface 20 inhibits deflection of the pedestal and bearing cap, particularly in an outward axial direction during operation of the differential, and more particularly while under load.

FIGURE 4A illustrates that flange 24 and hub 25 need not be integral with the screw but may be separate and having an opening 23 through which a conventional screw such as a cap screw is received.

In the view shown in FIGURE 5, axle shaft 12' has a differential end gear 31 secured thereto that is received in bearing 32 and journaled for rotation thereby. Bearing 32, is secured to pedestal 14' by means of bearing cap 15' that is secured to pedestal 14' by fasteners 100 of the invention spaced apart from each other on opposite sides of axle shaft 12'.

Annular surface 26 is adapted to rest against bearing cap 15' when the portion of head "H", such as peripheral edge 30 of flange 24, engages the surface of axle housing 4 desired such as the inner surface of rib 20 previously described.

Additionally, since a pair of fasteners is required to rotatably mount the differential gearing to which the opposed axle shafts are secured on opposite sides of the differential, only one of the fasteners need be employed on each side of the differential to engage the axle frame in a manner sufficient to inhibit deflection of the bearing caps and pedestals although two of the fasteners of the invention for each axle shaft on opposite sides of the differential is preferred.

## Claims

1. An improved fastener (100) for securing a bearing cap (15) to a carrier pedestal (14) of a vehicle differential within an axle housing (14), said fastener having a central rotational axis (c) and a threaded section (22) at one end for threadingly securing the bearing cap to the carrier pedestal and an enlarged head section (14) at an opposite end, and said improvement characterized by said head section (14) adapted to engage a surface (20) on the axle housing when the bearing cap is secured to the pedestal by the fastener so as to inhibit deflection of the bearing cap and the pedestal during operation of the differential.

2. The fastener of claim 1 wherein the head section (14) includes a flange (30) extending radially outwardly therefrom, the axle housing surface faces in a direction substantially transverse to the fastener central rotational axis (c), and the portion of the head section operative to engage therewith is a peripheral edge of the flange.

3. The fastener of claim 2 wherein the flange (30) is disposed between an annular surface (26) of the head section facing towards the bearing cap that is adapted to rest thereagainst when the bearing cap is secured to the pedestal by the fastener and a portion of the head section that is provided with means (28) for rotating the fastener about the central rotational axis.

4. An improved vehicle axle assembly (50) of the type having a differential gearing assembly mounted on a carrier housing (18) and drivingly connected to axle shafts (12 and 12') extending from opposite sides thereof that are journaled for rotation by bearings mounted on differential gearing secured to the axle shafts that are respectively secured to pedestals (14, 14') extending from the carrier housing (8) on opposite sides of the differential within an axle housing (4) by bearing caps (15, 15') that are secured to the pedestals by threaded fasteners having a central rotational axis (c), said fasteners (100) on opposite sides of the differential having an enlarged head section (14) that is adapted to engage a surface (20) on the axle housing when the bearing cap is secured by the fastener to the pedestal so as to inhibit deflection of the bearing caps and pedestals during operation of the differential.

5. The axle assembly (50) of claim 4 wherein the head section (14) includes a flange (30) extending radially outwardly therefrom, the axle housing surface (20) faces in a direction substantially transverse to the fastener central rotational axis (c), and a peripheral edge (50) of the flange engages the axle housing surface

(20).

6. The axle assembly (50) of claim 5 wherein the flange (30) is disposed between an annular surface (26) of the head section (14) facing towards the bearing cap that is adapted to rest thereagainst when the bearing cap is secured to the pedestal by the fastener (100) and a portion of the head section that is provided with means for (28) rotating the fastener about the central rotational axis (c).
